# EUROPEAN PATENT SPECIFICATION

(11) **EP 2 090 162 B1**
(45) Date of publication and mention of the grant of the patent: **29.08.2012**
(21) Application number: 09152453.8
(22) Date of filing: 10.02.2009
(51) Int. Cl.: A01K 89/027, A01K 89/01

(54) **Fishing spinning reel**
Angelrolle
Moulinet de pêche

(30) Priority: 12.02.2008 JP 2008030806
(43) Date of publication of application: 19.08.2009
(73) Proprietor: Globeride, Inc., Higashikurume-shi Tokyo 203-8511 (JP)
(72) Inventor: Hoshi, Naoki, Tokyo 203-8511 (JP)
(74) Representative: HOFFMANN EITLE

(56) References cited:
- JP-U- 58 085 965
- US-A- 4 634 074
- US-A- 5 277 379

## Description

### TECHNICAL FIELD

The present invention relates to a fishing spinning reel provided with a drag mechanism for giving resistance to rotation of a spool.

### BACKGROUND OF THE INVENTION AND RELATED ART STATEMENT

### DESCRIPTION OF THE PRIOR ART

Among fishing spinning reels, there have been known those having changeover mechanisms for changing over drag mechanisms between an operating state and a non-operating state. For example, Japanese Patent Laid-Open H-03-53836 or US-A-5277379has the changeover mechanism for changing over to the operating state of applying a dragging force on a spool and to the non-operating state of the spool free state (including a state of the spool being perfectly free and a state of dragging force acting by a sub-drag mechanism). The above published invention discloses a fishing spinning reel in which the changeover mechanism is installed between the spool and the spool shaft for intending to simplify respective drive mechanism systems within a reel main frame to enable miniaturization and lightening of weight.

The changeover mechanism of this known technique provides an operation member of a push button type at a front center of the spool, pushes backward the operation member, thereby to release a connection mechanism under the dragging state, and changes it over to a spool free state (the non-operating state). In this changeover mechanism accommodating the operation member such that it reciprocates back and forth at the front center of the spool, there is a problem that, since a space incorporating the drag mechanism is restrained, enough dragging force cannot be provided. Further, in this structure, if trying to strengthen dragging force, another problem arises that large size and overweight occur around the spool.

US 4634074 (A) discloses a spinning type fishing reel that includes a spool for carrying a coil of fishing line, a rotor which can be rotated in a forwards rotational direction for winding fishing line onto the spool, and a means for rotationally coupling the rotor to the spool, when the rotor is rotating in the reverse rotational direction to the forward rotational direction, so as in this case also to rotate the spool in the reverse rotational direction. Thereby, when the rotor and the spool are thus rotated in the reverse rotational direction, twisting which may have taken place in the fishing line may be cancelled by untwisting the fishing line again. The coupling means may be actuatable according to the desire of the fisherman, or alternatively may be always in operation. A braking means may be provided for braking this reverse rotation. And, in the event that the spinning type fishing reel includes a drag device for braking the rotation of the spool, this drag device may be rotationally uncoupled from the spool, when the spool and the rotor are thus being rotated together in the reverse rotational direction.

JP 58-85965 discloses a spinning reel in which a dragging mechanism can be changed from a locking condition to an unlocking condition.

### SUMMARY OF THE INVENTION

The present invention has an object of providing a fishing spinning reel enabling to display enough dragging force in the structure having the changeover mechanism for changing over the drag mechanism giving rotational resistance to the spool from the operating state to the non-operating state without a large size and overweight around the spool.

For accomplishing the above object, the fishing spinning reel according to the present invention has a structure comprising the spool mounted on a spool shaft and rolled thereon with the fishline, a rotor rotated by a rolling operation of a handle and enabling to roll the fishline round the spool via a fishline guiding part, and the changeover mechanism installed between the spool and the spool shaft for changing over the spool to the dragging operation state and the dragging free state.

The present invention is **characterized in that** the spool is rotated in an opposite direction to a fishline drawing direction when the spool is under the spool dragging state, thereby to release the connecting state of the changeover mechanism and to change over the spool under the dragging free state.

In this manner, the fishing spinning reel according to the present invention enables to give a required dragging force to the spool mounted on the spool shaft. Under the drag operating state, if operating the changeover mechanism, the spool is changed over to the free state. According to a preferred embodiment, returning effector of a return mechanism for switching the spool again to the dragging state is provided on the spool shaft and able to move back and forth together with the spool shaft, and therefore, it is no longer necessary to make the returning effector long-sized along the back and forth direction, taking the stroke moving back and forth into consideration. That is, since the returning effector can be made compact along the spool shaft, large size and overweight do not occur around the spool.

In a further preferred embodiment, the fishing spinning reel of the invention is characterized in that the returning mechanism is provided for returning the spool from the free state to the dragging state, the returning mechanism being installed to the spool shaft for reciprocating back and forth by linking with the spool shaft and having a return body rotating in relation with rotation of the rotor, and enabling to change over the spool to the dragging state via the return body by the rotor rotating in the fishline rolling direction.

Thereby, since the return body has the structure mounted on the spool shaft for reciprocating back and forth together with the spool shaft, it is not necessary to form the return body to have a long size in the back and forth direction, relative to the stroke of the reciprocating spool, so that the size can be made compact along the direction of the spool shaft, and the large size and heavy weight can be prevented around the spool.

In another preferred embodiment, the fishing spinning reel according to the invention is characterized in that the return body functions serving as a fishline drop preventer of preventing dropping of the fishline rolled on the spool.
Thereby, the return body is prepared in view of actuation of the fishline drop preventer (moving back and forth with the spool and rotating with the rotor) attached to the spinning reel, and it is unnecessary to provide a return body used exclusively to the spool shaft.

### BRIEF DESCRIPTION OF THE DRAWINGS

[Fig.1] is a view showing a first embodiment of the fishing spinning reel according to the invention, illustrating an interior structure (the dragging operation state);
[Fig.2] is a view seen from the front of the spool of the reel in Fig.1;
[Fig.3] is a view enlarging an element part of Fig.1;
[Fig.4] is a cross sectional view along A-A line of Fig.3, wherein (a) is a view showing the drag operating state, and (b) is a view showing the spool free state;
[Fig.5] is a cross sectional view along B-B line of Fig.3;
[Fig.6] is a view showing the condition of the spool moving forward;
[Fig.7] is a view showing a second embodiment of the invention, enlarging the part of the spool;
[Fig.8] is a cross sectional view along C-C line of Fig.7, wherein (a) is a view showing the drag operating state, and (b) is a view showing the spool free state; and
[Fig.9] is a cross sectional view along D-D line of Fig.8(a).

### DETAILED DESCRIPTION OF PREFERRED EMBODIMENT

Explanation will be made to preferred exemplary embodiments of the fishing spinning reel of the invention with reference to the attached drawings.

### [Spinning reel main body]

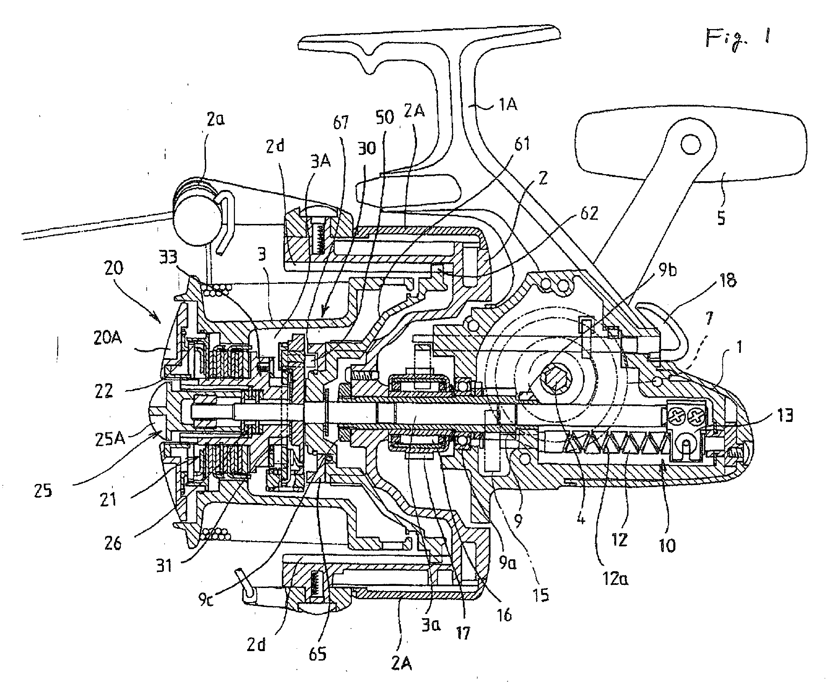

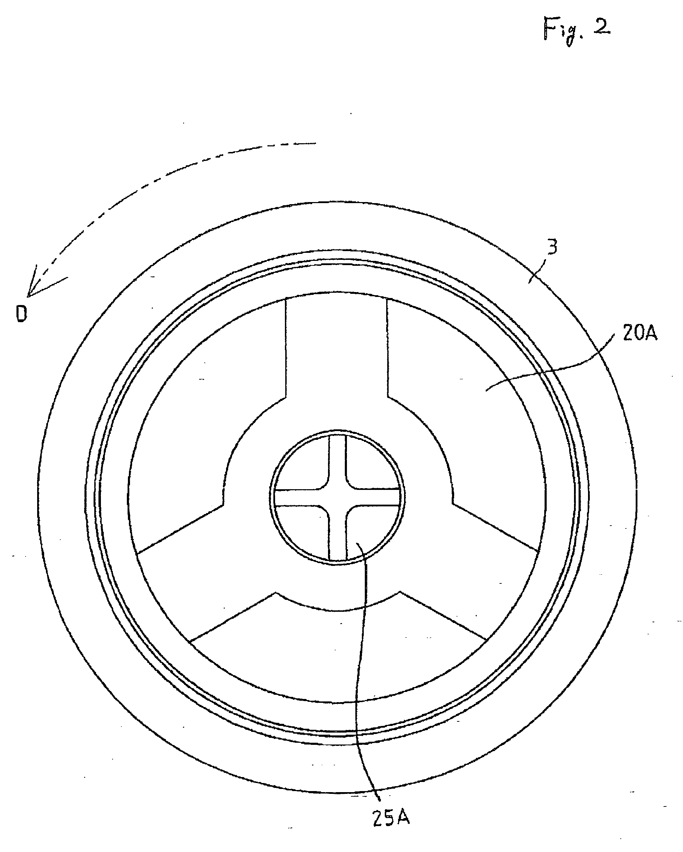

As shown in figs. 1 and 2, a reel element 1 of the fishing spinning reel is integrally formed with a reel foot 1A to be attached to a fishing rod, and at the front side, is provided with a rotor 2 rotatably supported and having a pair of arm parts 2A with a fishline guiding portion 2a. A spool 3 is supported movably back and forth in synchronization with rotation of the rotor 2 and can be rolled up with fishline.

Within the reel element 1, a handle shaft (drive shaft) 4 is rotatably supported, and attached at the projection end with a handle 5. The handle shaft 4 engages a drive mechanism which has a drive gear 7 furnished to the handle shaft 4 and is formed with inner teeth, and a pinion gear 9 in mesh with the drive gear 7, extending in a direction crossing with the handle shaft 4 and formed inside with a cavity part extending inward in an axial direction.

The pinion gear 9 is rotatably supported via bearings 9a, 9b within the reel element, and secures at the front end side the rotor 2 by a securing member 9c so as to rotate the rotor 2 as one body. Within the cavity part, the spool shaft 3a is movably inserted in the axial direction, extending in the direction crossing with the handle shaft 4 and attaching the spool 3 at the front end. Further, the pinion gear 9 engages a known reciprocating device 10 for reciprocating the spool 3 (the spool shaft 3a) back and forth.

The reciprocating device 10 is rotatably supported within the reel element, and has a screw shaft (worm shaft) 12 extending in parallel to the spool shaft 3a and a slider 13 unrotational at the rear part of the spool shaft 3a and engaged movably in an axial direction. The screw shaft 12 is provided at the front end with an interlocking gear 15 in mesh with the pinion gear 9, and when rotating the handle 5, the screw shaft 12 is rotated and driven via the drive gear 7, pinion gear 9 and interlocking gear 15. The screw gear 12 is formed on the peripheral face with a spiral cam groove 12a along the axial direction, and when this cam groove 12a is engaged with an engaging pin (not shown) received and held by the slider 13, the spool shaft 3a (the spool 3) is reciprocated back and forth by the rolling operation of the handle 5.

The reel element 1 has installed therein a backstop mechanism to prevent reverse rotation of the rotor 2. The backstop mechanism has, as known, a rolling system one-way clutch 16 installed in the outer peripheral side of the pinion gear 9 and a ratchet 17 detent-fixed in the outer periphery of an outer wheel of the rolling system one-way clutch, and when switching a changeover lever 18 installed at the rear side of the reel element 1, it switches the ratchet 17 to Rotation OK/Rotation NON, thereby to switch the rotor 2 to Reverse rotation/Backstop.

With the above mentioned structure, when rolling the handle 5, the rotor 2 is rotated via the drive gear 7 and the pinion gear 9, and the spool 3 is reciprocated back and forth via the drive gear 7, pinion gear 9 and reciprocating device 10. The spool 3 is uniformly rolled with the fishline via the fishline guiding portion 2a of the rotating rotor 2.

### [Dragging mechanism]

Between the spool 3 and the spool shaft 3a, there is provided a know drag mechanism (front drag mechanism) 20 for giving a braking force to rotation effected when the spool 3 rotates in a fishline dragging direction. The drag mechanism 20 has the effect of causing the spool 3 and the spool shaft 3a to be connected by a determined frictional force such that the braking force to rotation of the spool 3 is applied to the spool shaft 3a.

Concretely, the drag mechanism 20 is installed in an interior space range (concave) 3A of the spool 3, and has a selector (coarse adjustment thumb) 20A for adjusting the braking force rotatably supported at the front end of the spool and a braking member 21 interposed between the selector 20A and a frictional effector 33 composing a later-mentioned changeover mechanism 30. When rotating the selector 20A, a presser 22 moving axially together therewith is contacted to the braking member 21 by a determined pressing force, thereby to actuate a desired braking force between the spool 3 and the frictional effector 33 fixedly secured to the spool shaft 3a via the braking member 21.

In addition, the frictional effector 33 is changed over by the changeover mechanism 30 from the fixing state to the free state with respect to the spool shaft 3a.

### [Changeover mechanism]

Herein, the structure of the changeover mechanism 30 will be described. In this case, the changeover mechanism 30 is sufficient to be structured to change over the spool 3 between the dragging state and the non-dragging state (spool free state), and in this embodiment, as mentioned below, if rotating the spool 3 in the opposite direction to the fishline dragging direction, the changing-over is accomplished.

That is, the changeover mechanism 30 of this embodiment is detent-fixed with respect to the spool shaft 3a, and has a support member 31 of a disk shape restrained to move in the axial direction, the frictional effector 33 disposed at the front side of the support member 31 and connected to the support member 31, and a making and breaking mechanism 40 positioned between the support member 31 and the frictional effector 33 for making and breaking connection of both. When the spool 3 is dragging, if rotating the spool 3 in an opposite direction to the fishline dragging direction, the connection of the changeover mechanism 30 is released and the spool 3 is changed over to the free state. Concretely, as mentioned below, when the frictional effector 33 structuring the changeover mechanism 30 is under the dragging condition, the connection with the support member 31 is released. Thus, the spool 3 is supported on the spool shaft 3a in the state of enabling the free rotation.

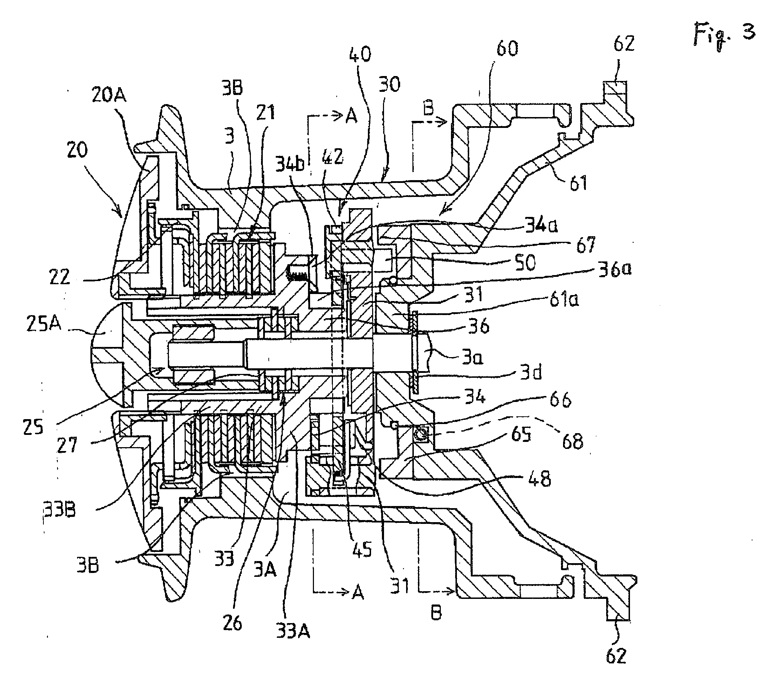

The frictional effector 33 has, as shown in Figure 3, a main frame 33A supported to enable free rotation with respect to the spool shaft 3a and a cylindrical part 33B extending forward from the basic frame 33A. In this case, the cylindrical part 33B has a shape to create a desired space in relation with the spool shaft 3a, which accommodates a later-mentioned sub-drag mechanism 25 therein.

### [Braking member]

Between the outer periphery of the cylindrical part 33B of the frictional effector 33 and the concave 3A of the spool 3, there is arranged the braking member 21 composing a drag mechanism 20. As generally known as the drag mechanism, the braking member 21 has a structure having an inside periphery 3B defining the concave 3A of the spool 3, plural sheets of washers whirl-stopped with respect to the outside periphery of the cylindrical part 33B of the frictional effector 33, and lining materials interposed between the respective washers. When rotating the selector 20A, the presser 22 moving in the axial direction is contacted to the braking member 21 by a determined pressing force, thereby to actuate the desired braking force between the spool 3 and the frictional effector 33 fixedly secured to the spool shaft 3a via the braking member 21.

The sub-drag mechanism 25 received in the inside space of the cylindrical part 33B of the frictional effector 33 enables, as explained below, to cause the auxiliary dragging force to act on the spool 3 even if the spool 3 is switched to the spool free state.

### [Sub-drag mechanism]

Concretely, the sub-drag mechanism 25 is supported rotatably inside in the axial direction of the selector (the coarse adjustment thumb) 20A supported rotatably at the front end of the spool 3, and has the fine adjustment thumb 25A supported rotatably and slidably along the axial direction and the braking member 26 pressed by a presser 27 provided at the front end of the fine adjustment thumb 25A. In this case, as generally known as the drag mechanism, the braking member 26 has a structure having the spool shaft 3a, plural sheets of washers whirl-stopped with respect to the inside of the cylindrical part 33B of the frictional effector 33, and the lining materials interposed between the respective washers. When rotating the fine adjustment thumb 25A, the presser 27 formed integrally with the fine adjustment thumb 25A contacts the braking member 26 at a determined pressing force, thereby to actuate the auxiliary desired braking force between the spool shaft 3a and the spool 3 via the braking member 26, frictional effector 33 and braking member 21.

The support member 31 composing the changeover mechanism 30 is whirl-stopped with respect to the spool shaft 3a, and makes and breaks the connection of the support member 31 and the frictional effector 33 by the making and breaking mechanism 40 in relation with the frictional effector 33.

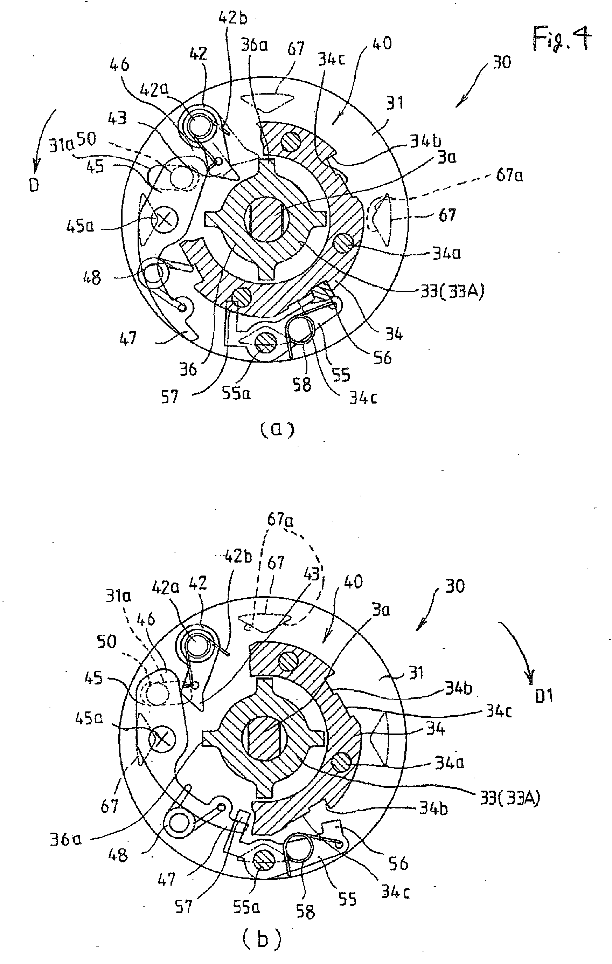

In the main frame 33A of the frictional effector 33, a making and breaking portion 34, formed in bracelet shape, is connected via a fixture (set screw) 34a to the side of the support member 31. In the outer periphery of the making and breaking portion 34, concave portions 34b are formed with a determined space (in this embodiment, four parts with 90° spacing), and in the concave portions, later mentioned engaging portions 56 of a stopper 55 are set. In this case, as shown in Figure 4, guiding portions 34c may be formed following the peripheral direction for easily guiding the engaging portions of the stopper into the concave portions 34b.

In the main frame 33A, a convex part 36 is formed projecting toward the support member 31, and in the outer periphery of the convex part 36, engaging projections 36a are formed at determined spaces (in this embodiment, four parts at the 90° space). The engaging projections 36a are so structured as to contact the effector 42 of the making and breaking mechanism 40.

### [Making and breaking mechanism]

The making and breaking mechanism 40 has, as shown in Figure 4, the effector 42, connecting member 45 and stopper 55 supported in the peripheral direction on the surface of the frictional effector of the support member 31.

### [Effector]

The effector 42 is supported rotatably around the center of a supporting portion 42a, and an actuating piece 43 is, as shown with a solid line in Figure 4(a), biased and supported by a spring 42b so that it is always positioned within the rotating locus of the engaging projections 36a.

### [Connecting member]

The connecting member 45 is supported around the center of the supporting portion 45a at the central part such that both ends are made turnable and the actuating piece 43 contacts a contacting part 46 of one side. The other side is formed with an actuating part 47 contacting the convex portion 57 of a stopper 55 when counterclockwise rotating the connecting member 45 around the supporting portion 45a from the state shown in Figure 4(a). The connecting member 45 is supported to be directed between the state shown in Figure 4(a) (the connected state) and the state shown in Figure 4(b) (the released state) by a director spring 48 provided in relation with the support member 31.

The connecting member 45 is projected, at the contacting part 46, with an engaging pin 50 for the return mechanism. The engaging pin 50 projects toward the main frame side of the reel via an oblong hole 31a formed in the supporting member 31, and when the connecting member 45 is directed to and held under the released state shown in Figure 4(b), it is positioned within the rotating locus of a returning projection 67 of a return mechanism described further below.

The stopper 55 is supported around the supporting portion 55a at the central part such that both ends are made turnable, and the engaging portion 56 formed at its one end enters the concave portions 34b formed in the outer periphery of the making and breaking part 34. Further, the other side is formed with the convex portion 57 for the actuating part 47 of the connecting member 45 to contact when rotating counterclockwise the connecting member 45 around the supporting portion 45a from the state shown in Figure 4(a). The stopper 55 is always rotated and biased in the direction of the engaging portion 56 entering the concave 34b of the making and breaking portion 34 by a direction spring 58 provided in relation with the support member 31.

As mentioned above, the changeover mechanism 30 has the support member 31 in disk shape whirl-stopped with respect to the spool shaft 3a and the frictional effector 33 disposed at the front side of the support member 31 and connected to the support member 31, and being under the dragging state shown in Figure 4(a), when rotating the spool 3 in the opposite direction (an arrow direction D) to the direction of dragging out the fishline, the connection between the frictional effector 33 and the support member 31 shown in Figure 4(a) is released as shown in Figure 4(b) (the spool is made free). The changeover mechanism 30 is structured in a manner that the spool free state shown in Figure 4(b) is automatically returned to the dragging state shown in Figure 4(a) by the return mechanism 60 when rolling the handle 5.

In the following, the return mechanism 60 will be referred to.

### [Structure of return mechanism]

The return mechanism 60 switches to return the spool 3 to the dragging state via the changeover mechanism 30 in that rotor 2 rotates in the direction of rolling fishline, and it has the return effector enabling to engage the changeover mechanism.

In the present embodiment, the return effector is structured to have a function of a fishline drop preventer to prevent dropping of the fishline rolled on the spool 3. In other words, with regard to the function of the fishline drop preventer moving back and forth together with the spool 3 and rotating together with the rotor, the return effector (also called a line guard) is installed between a pair of arm parts 2A integrally formed in the rotor and the spool shaft 3a.

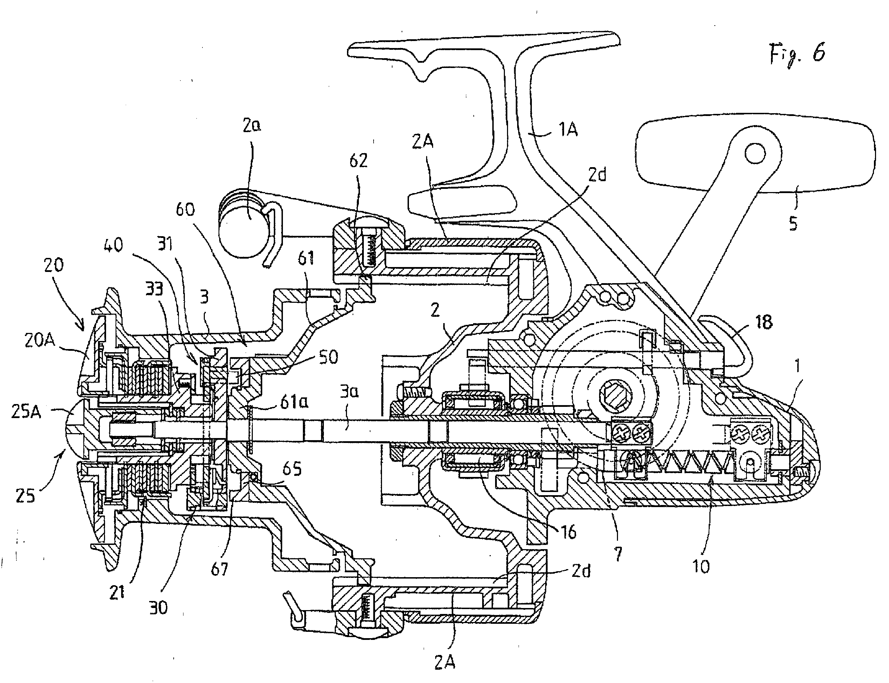

Concretely, the fishline drop preventor 61 is supported rotatably with respect to the spool shaft 3a, and positioned and held not to move in the axial direction by a stopping ring 3d mounted on the spool shaft 3a. The fishline drop preventor 61 has engaging parts 62 engaging oblong grooves 2d formed in the respective insides of the pair of arm parts 2A, rotates together with the rotor 2 when the rotor 2 rotates, and as shown in Figures 1 and 6, reciprocates in the axial direction in company with reciprocation of the spool 3 in order to prevent the fishline rolled on the spool 3 from entering the spool 3 and twining about the spool shaft 3a.

At the side of the drag mechanism of the fishline drop preventor 61, a cylindrical supporting part 61a is projected into a center of which the spool shaft 3a passes. At the outside in the diameter direction of the supporting part 61a, a return body 65 of a bracelet shape is held via an O-ring 66 so as not to slip out.

At the side of the drag mechanism of the return body 65, returning projections (return effector) 67 are formed at determined spaces (in this embodiment, four parts with the 90° space). The returning projection 67 rotates together with the fishline drop preventor 61, and contacts the engaging pin 50 of the connecting member 45 when the connecting member 45 is directed to the spool free condition shown in Figure 4(b).

The return body 65 and the returning projection 67 are provided with a non-dead point mechanisms 70 to prevent dead points when the engaging pin 50 moves into the rotation locus of the returning projection 67. The non-dead point mechanism 70 is composed of an inclining face 67a formed inside in the diameter direction of the returning projection 67 and a spring member 68 making the return body 65 held in the fishline drop preventor 61 rotatable in the peripheral direction such that the engaging pin 50 can move even if the engaging pin 50 contacts the returning projection 67, when the engaging pin 50 moves into the rotation locus of the returning projection 67.

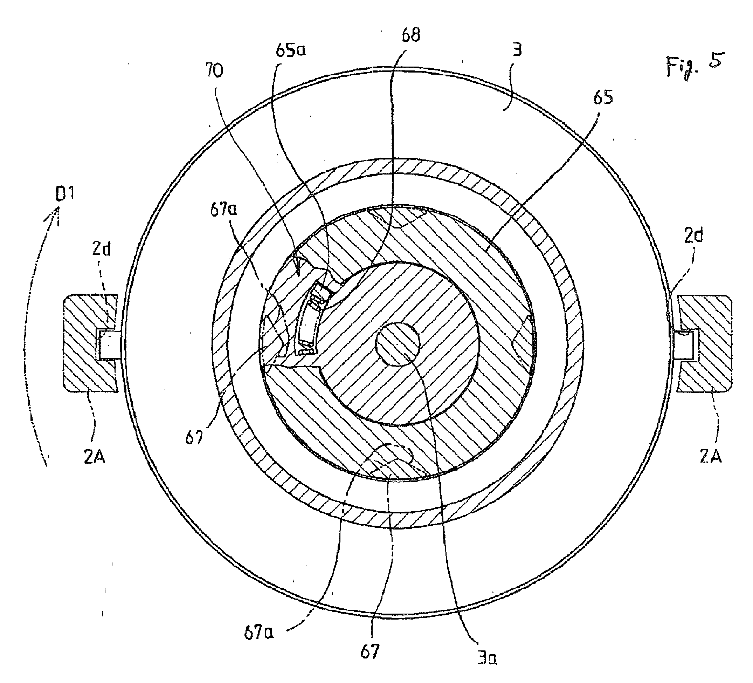

As shown in Fig.5, the spring member 68 is interposed with respect to the return body 65 between a projection piece 65a formed toward the reel main frame and the fishline drop preventor 61 for allowing the return body 65 to rotate in the peripheral direction. That is, even if the returning projection 67 positions on the moving path of the engaging pin 50, since the engaging pin 50 contacts the inclining face 67a formed inside in the diameter direction of the returning projection 67 and the return body 65 can rotate in the peripheral direction by cushion of the spring member 68, the dead-point is never created when moving to the spool free condition.

By the above mentioned returning mechanism 60, when driving to roll the handle 5, it is automatically returned from the spool free state shown in Figure 4(b) to the dragging operation state shown in Figure 4(a).

Explanation will be made to the above structured fishing spinning reel.

### [Actuation of spinning reel]

The fishing spinning reel is usually used in the dragging condition. Then, to the spool 3, that is, to the fishline dragged out, a predetermined dragging force acts through the dragging mechanism 20. Under this condition, if rotating the selector 20A, a pressing force to the braking member 21 of the presser 22 is varied, so that desired dragging force can be effected to the spool 3.

By the way, under the dragging operation state, as shown in Figure 4(a), the frictional effector 33 and the supporting member 31 secured to the spool shaft 3a are connected because the engaging portion 56 of the stopper 55 at the side of the supporting member 31 is set in the concave 34b at the side of the frictional effector 33, while rotation acting on the spool 3 is effected with a desired force owing to the relation between the braking member 21 and the supporting member 31 (the frictional effector 33) secured to the spool shaft 3a.

When rotating the spool 3 from the state shown in Figure 4(a) in the opposite direction (arrow D) to the direction of dragging the fishline, the spool 3 is changed over by the making and breaking mechanism 40 to the spool free condition (braking force of the drag mechanism does not act on the spool).

That is, in Figure 4(a), if rotating the spool 3 in the arrow direction D, the frictional effector 33 also rotates in the same direction. At this time, the engaging projection 36a formed in the convex 36 of the main frame 33A contacts the actuating piece 43 of the effector 42 and rotates clockwise the effector 42 around the center of the supporting part 42a against a biasing force of the spring member 42b. Due to rotation of the effector 42, the actuating piece 43 contacts the contacting part 46 at one side of the connecting member 45, and the connecting member 45 is rotated counterclockwise around the supporting part 45a. Thereby, the actuating part 47 at the other side of the connecting member 45 contacts the convex 57 of the stopper 55, and the stopper 55 is rotated clockwise around the center of the supporting part 55a against the biasing force of the one-directional spring 58, and the engaging part 56 of the stopper 55 moves out from the concave 34b at the side of the frictional effector 33. Then, since the connecting member 45 is positioned by the director spring 48, the making and breaking state is maintained with respect to the concave 34 of the engaging part 56.

Since the connecting state between the supporting member 31 and the frictional effector 33 is released by actuation of the making and breaking mechanism 40, the spool 3 turns out the free rotation with respect to the spool shaft 3a, and even if a force acts on the spool 3 in the fishline dragging direction, the spool 3 only rotates together with the effector 21 and the frictional effector 33. Namely, when actually fishing, a fisherman can switch the spool 3 to the free state by only holding and rotating the spool 3 in the arrow D direction in the opposite direction to the direction of dragging the fishline at a determined angle (angle of the engaging projection 36a contacting the actuating piece 43 of the effector 43).

Under the above mentioned spool free state, by rolling the handle 5, the making and breaking mechanism 40 can be automatically returned to the state shown in Figure 4(a) via the returning mechanism 60.

As mentioned above, when switching to the spool free state, the connecting member 45 is rotated from the position shown in Figure 4(a) to the position shown in Figure 4(b). Then, the engaging pin 50 projected on the connecting member 45 moves to the rotating locus of the returning projection 67 formed in the return body 65 rotating together with the rotor 2 rotating. When the engaging pin 50 moves into the rotating locus of the returning projection 67, even if the returning projection 67 positions on the moving path of the engaging pin 50, this moving is not avoided by the above mentioned non-dead point mechanism 70.

When rotating the handle 5 to rotate the rotor 3 in the direction of rolling the fishline, the fishline drop preventer 61 is also rotated. The fishline drop preventer 61 is, as mentioned above, held with the return body 65 projected with the returning projection 67 (the returning effector), and the returning projection 67 is rotated in the arrow D1 direction of Figure 4(b) together with the fishline drop preventer 61. Thereby, the returning projection 67 kicks the engaging pin 50 to rotate the connecting member 45 clockwise around the supporting part 45a, and the actuating part 47 at the other side of the connecting member 45 separates from the convex 57 of the stopper 55. Then, the connecting member 45 is held by the director spring 48 in the position shown in Figure 4(a).

As a result, the stopper 55 is rotated counterclockwise around the supporting part 55a by the biasing force of the one- directional spring 58, the engaging part 56 of the stopper 55 enters the concave 34 at the side of the frictional effector 33, and as shown in Figure 4(a), the frictional effector 33 and the supporting member 31 secured to the spool shaft 3a are connected. Namely, the changeover mechanism 30 is switched and returned to the dragging condition of applying the desired braking force on the spool by the relation between the braking member 21 and the supporting member 31 secured to the spool shaft 3a.

By the above structure, since the returning projection (returning effector) 67 of the returning mechanism 60 for switching the spool 3 again to the dragging state is provided on the spool shaft 3a and is able to move back and forth together with the spool shaft, and therefore, it is no longer necessary to make the returning effector long sized along the back and forth direction, taking the stroke of the spool 3 moving back and forth into consideration. That is, since returning effector can be made compact along the spool shaft 3a, the large size and overweight do not occur around the spool. In particular, since this embodiment provides the returning effector, paying attention to the function (moving back and forth with the spool and rotating with the rotor) of the fishline drop preventor 61 mounted on the fishing spinning reel, it is unnecessary to especially provide a return body used exclusively to the spool shaft 3a.

Besides, no influence is received, as the prior art, from the return effector long in the axial direction, so that the supporting condition is stable in the rotor 2 or the spool 3 to the spool shaft 3a, and the favorable rolling and dragging facilities may be effected.

By the above structure, it is no longer necessary to furnish an operating member as the changeover mechanism 30 advancing and retreating along the spool shaft, and of course, the dragging mechanism 20 and the sub-dragging mechanism 25 do not restrain installing spaces.
Consequently, enough dragging force may be displayed, and it is not necessary to provide a large size and heavy weight round the spool. Further, there is no probability of an erroneous pushing operation, or dragging by error because of colliding foreign materials when actually fishing.

Under the spool free state, if rotating the fine adjustment thumb of the sub-dragging mechanism 25, it is also possible to keep an auxiliary braking force by the braking member 26 acting on the spool 3 under the free state.

Under the dragging state as mentioned above, when catching a fish, dragging out the fishline, and rotating the spool 3 in the fishline dragging direction (in the opposite direction to the arrow D of Figure 4(a)), although the engaging projection 36a contacts the operating piece 43 of the effector 42 following the rotation, the actuating piece 43 can escape to a position shown with a dotted line against the biasing force of the spring member 42b, and the spool can rotate in such a direction without any obstacle.

### [Second embodiment]

Next, explanation will be made to a second embodiment of the invention.

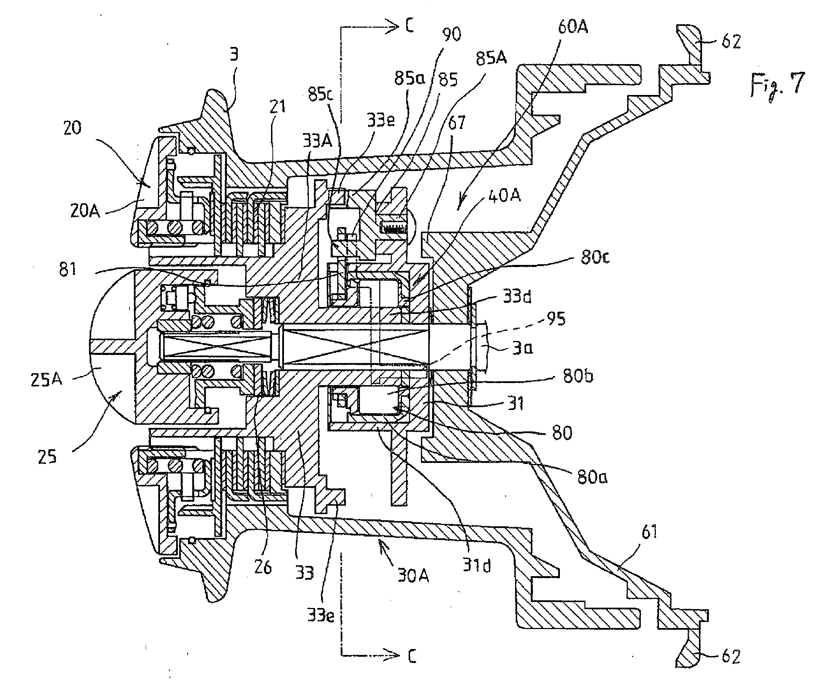

Figures 7 to 9 show the second embodiment of the invention. Figure 7 is an enlarged view of part of the spool,

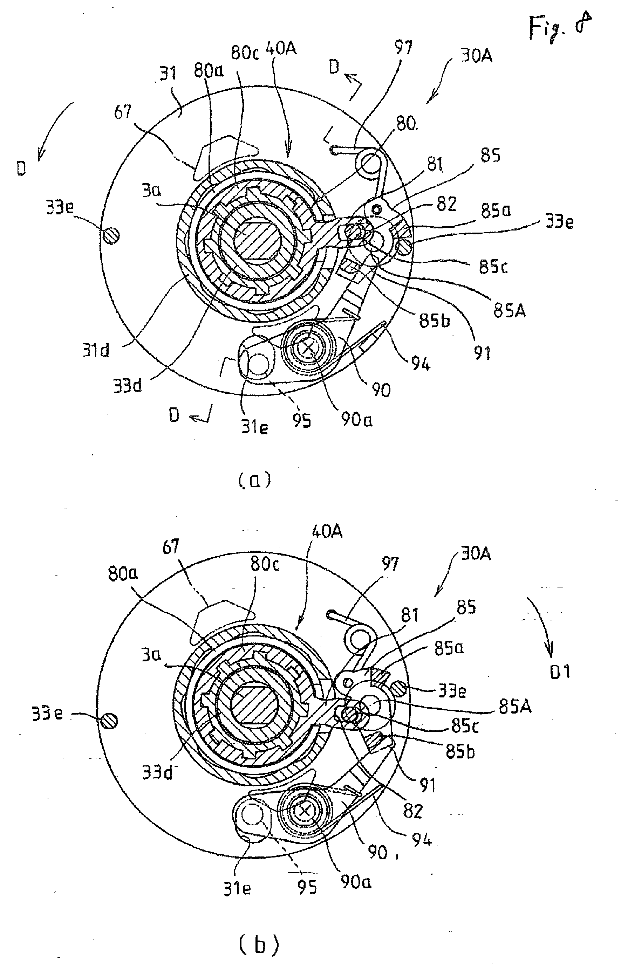

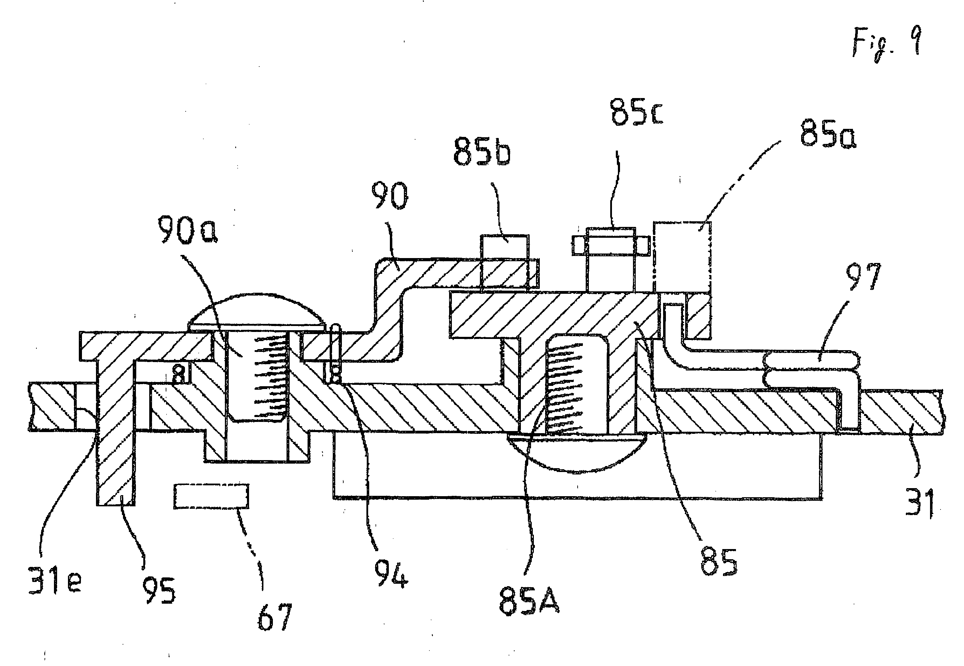

Figure 8 is a cross sectional view along C-C line of Figure 7, wherein (a) is the view showing the drag operating state, and (b) is the view showing the spool free state; and Figure 9 is a cross sectional view along D-D line of Figure 8(a). This embodiment uses the same numerals for the same structure of the above mentioned embodiment, so an explanation thereof will be omitted.

In the present embodiment, a rolling system one-directional clutch is employed in the making and breaking mechanism composing the changeover mechanism. That is, the changeover mechanism 30A in this embodiment interposes the rolling system one-directional clutch 80 as the making and breaking mechanism 40A between the frictional effector 33 and the supporting member 31 for making and breaking the connection of both.

Concretely, the frictional effector 33 is formed at the main frame 33A with an axial part 33d rotatably mounted on the spool shaft 3a, the supporting member 31 is formed with the cylindrical part 31d extending toward the side of the dragging mechanism, and the rolling system one-directional clutch 80 is interposed between the axial part 33d and the cylindrical part 31d. The rolling system one-directional clutch 80 has as known a structure having an inner ring (in this embodiment, the axial part 33d is the inner ring) integral with the axial part 33d, an outer ring 80a inserted in the cylindrical part 31d, and retainer 80c holding a rolling member 80b between the inner ring 33d and the outer ring 80a.

The rolling member 80b is positioned by the retainer in either of a wedge range formed in the inner peripheral side of the outer ring 80a and the free rotation range, and when the rolling member 80b is moved to the wedge range, the inner ring and the outer ring (the axial part 33d and the cylindrical part 31d) are made integral, and the frictional effector 33 and the supporting member 31 are connected. When the rolling member 80b is moved to the free rotation range, the inner ring and the outer ring (the axial part 33d and the cylindrical part 31d) are made free, and the connection of the frictional effector 33 and the supporting member 31 is released (switched to the free rotation).

As shown in Figure 8, the rolling system one-directional clutch 80 is furnished with an actuating arm 81 rotating together with the retainer 80c (the actuating arm 81 may be formed integrally with the retainer or may be separate), and if turning the actuating arm 81, the rolling member 80b held by the retainer 80c may be moved to the wedge range or the free rotation range. The actuating arm 81 is formed with an engaging hole 82 engaged with a third actuating projection 85c projected from the later mentioned actuating cam 85.

The supporting member 31 is supported with the actuating cam 85 rotatably around a supporting axis 85A, this actuating cam 85 composing the making and breaking mechanism 40A. The actuating cam 85 is projected with a first actuating projection 85a toward the side of the drag mechanism, and at this first actuating projection 85a, an engaging projection 33e enables to contact outside of the axial direction of the main frame 33A of the frictional effector 33, this engaging projection 33e being projected toward the reel main frame. In this case, this embodiment forms two engaging projections 33e with 180° space.

Further, the actuating cam 85 is formed with a second actuating projection 85b at a position opposite to the first actuating projection 85a around the supporting axis 85A. This second actuating projection 85b contacts an engaging part 91 formed at one end of a returning connection member 90 to be explained under.

The returning connection member 90 composes a return mechanism 60A, and is supported rotatably around the center of the supporting part 90a in the support member 31. In regard to the return connection member 90, the engaging part 91 formed at one end thereof is biased by a biasing spring 94 to rotate such that the engaging part 91 always contacts the second actuating projection 85b.

Further, the returning connection member 90 is projected, at the other end, with an engaging pin 95 toward the reel main frame, and the engaging pin 95 passes through an oblong hole 31e formed in the supporting member 31 and projects out from the back of the supporting member 31. When the returning connection member 90 is rotated clockwise around the center of the supporting part 90a from the condition shown in Figure 8(a), the engaging pin 95 moves into the rotating locus of the returning projection 67 rotating integrally with the rotor 2 as shown in Figure 8(b) similarly to the first embodiment.

Besides, the actuating cam 85 is so formed with a third actuating projection 85c as to position in the engaging hole 82 of the actuating arm 81 provided to the rolling system one-directional clutch 80. When the actuating cam 85 is rotated counterclockwise by contacting of the engaging projection 33e of the frictional effector 33, the third actuating projection 85c rotates the actuating arm 81 to the position shown in Figure 8(b), and moves the rotating member 80b of the rolling system one-directional clutch 80 to the free rotation range.

The actuating cam 85 is provided with a director spring 97 in relation with the supporting member 31 for directing the actuating cam 85 to the position shown in Figure 8(a) and to the position shown in Figure 8(b).

Further explanation will be made as follows regarding the action of the above structured fishing spinning reel.

Under the dragging state shown in Figure 8(a), the frictional effector 33 and the supporting member 31 secured to the spool shaft 3a are connected by the wedging action of the rolling system one-directional clutch 80, and rotation acting on the spool 3 in the fishline drawing direction effects the desired braking force due to the relation between the above braking member 21 and the supporting member 31 secured on the spool shaft 3a.

When rotating the spool 3 from the state shown in Figure 8(a) in the opposite direction (the arrow D direction) to the direction of drawing the fishline, the spool 3 is switched to the spool free state (the condition of not actuating braking force of the drag mechanism 20 to the spool) by the making and breaking mechanism 40A.

That is, in Figure 8(a), when rotating the spool 3 in the arrow D direction, the frictional effector 33 also rotates in the same direction. At this time, the engaging projection 33e of the frictional effector 33 contacts the first actuating projection 85a of the actuating cam 85 and rotates the actuating cam 85 counterclockwise around the center of the supporting axis 85a. When the actuating cam 85 exceeds the dead point of the director spring 97, the spool 3 is held at the position shown in Figure 8(b), and the rolling system one-directional clutch 80 moves the rolling member 80b to the free rotation range by the third actuating projection 85c and the actuating arm 81, whereby the connection between the frictional effector 33 and the supporting member 31 secured to the spool shaft 3a is released, and the spool is switched to the free state.

Under the spool free state, the engaging pin 95 projected on the returning connection member 90 moves into the rotating locus of the returning projection 67 rotating integrally with rotation of the rotor 2 by rotation of the returning connection member 90.

In this case, the returning projection 67 does not furnish the return body 65 of the first embodiment, but is formed integrally in the fishline drop preventer 61. Of course, also with respect to the returning projection 67, the non-dead point mechanism may be structured as in the above mentioned embodiment. For example, it is sufficient to movably support the returning projection 67 inside of the diameter direction, otherwise to project the non-dead point mechanism on the return body 65 held to displace in the peripheral direction with respect to the fishline drop preventer 61 similarly to the first embodiment.

When rolling the handle 5 to rotate the rotor 3 in the direction of rolling the fishline, the returning projection 67 is also driven in the arrow D1 direction of Figure 8(b) together with rotation of the fishline drop preventer 61 . Thereby, the returning projection 67 kicks the engaging pin 95 to rotate the returning connection member 90 counterclockwise around the supporting part 90a, and the engaging part 91 of the returning connection member 90 rotates the actuating cam 85 clockwise around the center of the supporting part 85a via the second actuating projection 85b.

When the actuating cam 85 exceeds the dead point of the director spring 97, it is held at the position shown in Figure 8(a), and the rolling system one-directional clutch 80 moves the rotating member 80b to the wedging range by the third actuating projection 85c and the actuating arm 81, whereby the frictional effector 33 and the supporting member 31 secured to the spool shaft 3a are connected (the dragging state).

As mentioned above, if using the rolling system one-directional clutch 80 in the making and breaking mechanism composing the changeover mechanism, the structure of the whole of the changeover mechanism is simplified and incorporation of the making and breaking mechanism within the spool may be improved. The structure of the returning effector is also simplified.

The above explanation has been made to the embodiments of the invention, but the invention is not limited to such embodiments, and various kinds of embodiments are, of course, available. Therefore, the structures of the changeover mechanism and the operating member are not limited to the above mentioned structures, but various modifications are available. As to the returning effector, it may be provided on the spool shaft to move back and forth together with the spool shaft and it is sufficient with structure rotating with the rotor, and may not have the function of the fishline drop preventer.

### EFFECT OF THE INVENTION

According to the present invention, it is possible to provide the fishing spinning reel in the structure furnished with the changeover mechanism for changing over the dragging mechanism giving rotation to the spool from the operating state to the non-operating state without creating a large size and overweight around the spool. Further, since the return body has the structure mounted on the spool shaft for reciprocating back and forth together with the spool shaft, it is not necessary to form the return body to be long in size in the back and forth direction, taking into account the stroke of the reciprocating spool, so that the size can be made compact along the direction of the spool shaft 3a, and the large size and heavy weight can be prevented around the spool. Besides, since the return body is prepared, paying attention to the functions (moving back and forth with the spool and rotating with the rotor) serving as the fishline drop preventer for preventing dropping of the fishline rolled on the spool, it is unnecessary to provide a return body used exclusively on the spool shaft.

## Claims

1. A fishing spinning reel, having a spool (3) mounted on a spool shaft and upon which a fishline can be rolled, a rotor (2) rotatable by a rolling operation of a handle (5) to roll the fishline round the spool via a fishline guiding part, and a changeover mechanism (30) installed between the spool (3) and the spool shaf (3a) and adapted to change over the spool between a dragging operation state and a dragging free state, **characterized in that** the spool is adapted to be rotatable in an opposite direction (D) to a fishline drawing direction when the spool is under a spool dragging condition, thereby to release a connecting state of the changeover mechanism (30) and to change over the spool to the dragging free state.

2. A fishing spinning reel as set forth in claim 1, wherein the changeover mechanism (30) has a frictional effector (33) adapted to be driven via a dragging mechanism (20) and a rolling system one-directional clutch (80) interposed in relation with a supporting member (31) secured to the spool shaft (3a), and the rolling system one-directional clutch (80) is adapted to enable a change over of the frictional effector (33) and the supporting member (31) to a free rotation state when the rolling system one-directional clutch (80) is rotated in an opposite direction to a direction of dragging the fishline.

3. A fishing spinning reel as set forth in claim 1 or 2, further comprising a returning mechanism (60,60A) adapted to return the spool (3) from a free state to a dragging state, the returning mechanism being installed on the spool shaft (3a) such as to be reciprocatable back and forth by linking with the spool shaft and having a return body (65,67) rotatable in relation to rotation of the rotor (2), and being arranged to change over the spool to the dragging state via the return body.

4. A fishing spinning reel as set forth in claim 3, **characterized in that** the return body (65) is arranged as a fishline drop preventer (61) to prevent dropping of the fishline rolled on the spool.

## Patentansprüche

1. Angelrolle mit einer Spule (3), die auf einer Spulenwelle befestigt ist und auf der eine Angelschnur gerollt werden kann, einem Rotor (2), der durch einen Rollbetrieb eines Handgriffs (5) drehbar ist, um die Angelschnur über einen Angerschnurführungsabschnitt um die Spule zu rollen, und einem Wechselmechanismus (30), der zwischen der Spule (3) und der die Spulenwelle (3a) befestigt ist und die Spule zwischen einem Schleppbetriebszustand und einem schleppfreien Zustand wechseln kann, **dadurch gekennzeichnet, dass** die Spule in einer entgegengesetzten Richtung (D) zu einer Angelschnurzugrichtung gedreht werden kann, wenn sich die Spule in einem Spulenschleppzustand befindet, um hierdurch einen Verbindungszustand des Wechselmechanismus (30) freizugeben und die Spule in den schleppfreien Zustand zu wechseln.

2. Angelrolle gemäß Anspruch 1, bei der der Wechselmechanismus (30) einen Reibeffektor (33) aufweist, der über einen Schleppmechanismus (20) und eine Rollsystem-Einwegkupplung (80) angetrieben werden kann, die in Relation mit einem Stützbauteil, das an der Spulenwelle (3a) gesichert ist, eingefügt ist, und die Rollsystem-Einwegkupplung (80) ein Wechseln des Reibeffektors (33) und des Stützbauteils (31) in einen Freidrehzustand ermöglichen kann, wenn die Rollsystem-Einwegkupplung (80) in einer entgegengesetzten Richtung zu einer Schlepprichtung der Angelschnur gedreht wird.

3. Angelrolle gemäß Anspruch 1 oder 2, ferner aufweisend einen Rückführmechanismus (60, 60A), der die Spule (3) von einem freien Zustand zu einem Schleppzustand rückführen kann, wobei der Rückführmechanismus so an der Spulenwelle (3a) installiert ist, dass er durch Verknüpfen mit der Spulenwelle vor und zurück bewegbar ist, und einen Rückführkörper (65, 67) aufweist, der in Relation zu einer Drehung des Rotors (2) drehbar ist, und eingerichtet ist, die Spule über den Rückführkörper zu einem Schleppzustand zu wechseln.

4. Angelrolle gemäß Anspruch 3, **dadurch gekennzeichnet, dass** der Rückführkörper (65) als eine Angelschnursicherung (61) vorgesehen ist, um ein Abgehen der auf der Spule gerollten Angelschnur zu verhindern.

## Revendications

1. Moulinet de pêche, ayant un tambour (3) monté sur un arbre de tambour et sur lequel une ligne de pêche peut être enroulée, un rotor (2) pouvant tourner par une opération d'enroulement d'une poignée (5) pour enrouler la ligne de pêche autour du tambour via une partie de guidage de ligne de pêche, et un dispositif de retournement (30) installé entre le tambour (3) et l'arbre (3a) de tambour et adapté pour faire basculer le tambour entre un état d'opération de traînage et un état libre de traînage, **caractérisé en ce que** le tambour est adapté à tourner dans une direction (D) opposée à une direction d'étirage de la ligne de pêche lorsque le tambour est dans une condition de traînage de tambour, pour libérer ainsi un état de connexion du dispositif de retournement (30) et pour faire basculer le tambour à l'état libre de traînage.

2. Moulinet de pêche tel que présenté dans la revendication 1, dans lequel le dispositif de retournement (30) a un effecteur de frottement (33) adapté pour être actionné via un mécanisme de traînage (20) et un embrayage (80) unidirectionnel de système d'enroulement interposé en rapport avec un élément (31) de support fixé à l'arbre (3a) de tambour, et l'embrayage (80) unidirectionnel de système d'enroulement est adapté pour permettre un passage de l'effecteur de frottement (33) et de l'élément (31) de support à un état de rotation libre lorsque l'embrayage (80) unidirectionnel de système d'enroulement est mis en rotation dans une direction opposée à une direction de traînage de la ligne de pêche.

3. Moulinet de pêche tel que présenté dans la revendication 1 ou 2, comprenant en outre un mécanisme de retour (60, 60A) adapté pour renvoyer le tambour (3) à partir d'un état libre à un état de traînage, le mécanisme de retour étant installé sur l'arbre (3a) de tambour de manière à avoir un mouvement de va-et-vient par liaison avec l'arbre de tambour et ayant un corps de retour (65, 67) pouvant tourner par rapport à la rotation du rotor (2) et étant agencé pour faire passer le tambour à l'état de traînage via le corps de retour.

4. Moulinet de pêche tel que présenté dans la revendication 3, **caractérisé en ce que** le corps de retour (65) est agencé en tant qu'obturateur (61) de diminution de la ligne de pêche pour empêcher la ligne de pêche, enroulée sur le tambour, de tomber.
